# EUROPEAN PATENT APPLICATION

(11) **EP 4 424 691 A1**
(43) Date of publication of application: **04.09.2024**
(21) Application number: 22887453.3
(22) Date of filing: 18.10.2022
(51) Int. Cl.: C07F 9/6571, C07F 19/00

(54) **CYCLIC PHOSPHINE COMPOUND PREPARATION METHOD**

(30) Priority: 27.10.2021 KR 20210145021
(71) Applicant: Soulbrain Co., Ltd., Seongnam-si, Gyeonggi-do 13486 (KR)
(72) Inventor: YOO, Dae Hwan, Seongnam-si, Gyeonggi-do 13486 (KR); YU, Weon Ju, Seongnam-si, Gyeonggi-do 13486 (KR); MA, Jae Yeol, Seongnam-si, Gyeonggi-do 13486 (KR); JUNG, Kwang Ju, Seongnam-si, Gyeonggi-do 13486 (KR)
(74) Representative: Dehns
(86) International application number: PCT/KR2022/015785
(87) International publication number: WO 2023/075257

(57) **Abstract**

The present invention relates to a method of preparing a symmetric or asymmetric cyclic phosphine compound, the method including a step of reacting a cyclic phosphine compound with an organic halogen compound under a predetermined coupling agent.

The present invention provides a method of preparing a symmetric or asymmetric cyclic phosphine compound that uses cheaper compounds compared to a conventional method, has excellent economics by stably storing reaction raw materials, improves productivity and yield due to easy reaction control and low generation of by-products, is easily applied on an industrial scale, and has excellent expandability or substitutivity of a synthetic route.

## Description

### [Technical Field]

The present invention relates to a method of preparing a symmetric or asymmetric cyclic phosphine compound, and more particularly, to a method of preparing a symmetric or asymmetric cyclic phosphine compound that uses cheaper compounds compared to a conventional method when preparing a symmetric or asymmetric cyclic phosphine compound, has excellent economics by stably storing reaction raw materials, is capable of improving productivity and yield due to easy reaction control and low generation of by-products, is capable of being easily applied on an industrial scale, and has excellent expandability of a synthetic route.

### [Background Art]

Recently, in line with environmental regulations that are being strengthened around the world, methods of maximizing the performance of secondary batteries to replace fossil fuels are being intensively researched. Among the above methods, research is being actively conducted on electrolyte additives that can improve battery performance by forming a film (Cathode-Electrolyte Interface; CEI, or Solid Electrolyte Interface; SEI) that lowers the resistance of an electrode surface or preventing decomposition of an electrolyte. As the electrolyte additives, symmetric or asymmetric cyclic phosphine compounds such as 2,2'-oxybis(1,3,2-dioxaphospholane), 2,2'-oxybis(1,3,2-dioxaphosphinane), 2-[(trimethylsilyl)oxy]-1,3,2-dioxaphospholane, and derivatives thereof are used.

Known methods of preparing a symmetric or asymmetric cyclic phosphine compound include a method of preparing a symmetric or asymmetric cyclic phosphine compound by coupling reaction of a cyclic halophosphite compound and an alcohol-based compound in the presence of water (H₂O) and an aromatic amine (e.g., imidazole compound or pyridine) and a method of preparing a symmetric or asymmetric cyclic phosphine compound by reacting with a silanol group-containing compound such as trimethylsilanol and inducing an exchange reaction between a halogen group and an alkylsilane group.

When using water, accessibility to raw materials is excellent, but the precision of controlling the input amount of a reactant, that is, quantitative control, is relatively poor due to the relatively low molecular weight of about 18 g/mol. As a result, a large amount of side reactants are generated. In particular, when an excess of water is added, an unwanted polymerization reaction occurs successively in the desired reaction, resulting in a decrease in purity and yield.

In addition, when using trimethylsilanol or the like, economics are reduced due to the use of expensive reaction raw materials. In addition, there is a problem that industrialization is difficult due to poor storage stability as chemical reactions easily occur due to heat.

### [Related Art Documents]

### [Patent Documents]

US Patent No. 2,722,539 A

### [Disclosure]

### [Technical Problem]

Therefore, the present invention has been made in view of the above problems, and it is one object of the present invention to provide a method of preparing a symmetric or asymmetric cyclic phosphine compound that is capable of easily controlling reaction and has high purity and yield.

It is another object of the present invention to provide a method of preparing a symmetric or asymmetric cyclic phosphine compound that has excellent economics, is easy to industrialize, and has excellent expandability or substitutivity of a synthetic route.

The above and other objects can be accomplished by the present invention described below.

### [Technical Solution]

In accordance with one aspect of the present invention, provided is a method of preparing a cyclic phosphine compound, the method including reacting a compound represented by Chemical Formula 1 below with an organic halogen compound under an oxo coupling agent, wherein the oxo coupling agent is a compound represented by Chemical Formula 2 below. 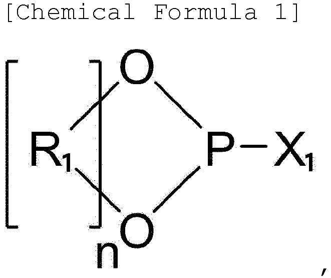 wherein R₁ is a substituted or unsubstituted alkylene group having 1 to 10 carbon atoms or an arylene group having 6 to 20 carbon atoms, the substitution is performed using one or more selected from the group consisting of an unsaturated hydrocarbon group having a monovalent or divalent double bond or a triple bond, a halogen group, a hydroxyl group, an amine group, an oxide group, a sulfide group, and a thiol group, n is an integer from 1 to 5, and X₁ is a halogen group.

[Chemical Formula 2] MₐH_{b}CO₃,

wherein M is a monovalent or divalent metal, preferably a monovalent metal, a is 1 or 2, preferably 1, and b is 0 or 1, preferably 1.

As the organic halogen compound, an organic halogen compound capable of coupling used in the art to which the present invention pertains may be used without particular limitation. Preferably, a compound represented by Chemical Formula 3 below may be used.

[Chemical Formula 3] X₂-R₂

In Chemical Formula 3, X₂ is a halogen group, R₂ is a radical represented by C_{d}HₑX'_{f}Y_{g}Zₕ, d is an integer from 1 to 15, f is an integer from 0 to 31, g is an integer from 0 to 5, h is an integer from 0 to 5, e is a value that satisfies an oxidation number of R₂, X' is a halogen radical, and Y and Z each independently include one or more selected from the group consisting of P, O, Si, N, and S.

An oxidation number of R₂ may be +1, which may be a sum of oxidation numbers of all atoms included in R₂. For example, when R₂ is C₂HₑSi, e must be 5 to satisfy +1, which is the oxidation number of R₂.

In the present disclosure, a radical refer to a compound or atomic group containing one electron used in covalent bonding, which may also be referred to as a group.

The compound represented by Chemical Formula 3 may preferably include one or more selected from the group consisting of compounds represented by Chemical Formulas 3-1 to 3-12 below (In each Chemical Formula, X₂ is independent).

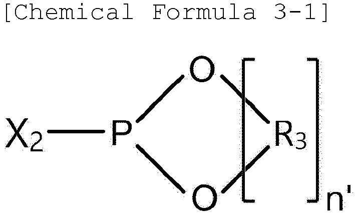

In Chemical Formula 3-1, R₃ is a substituted or unsubstituted alkylene group having 1 to 10 carbon atoms or a substituted or unsubstituted arylene group having 6 to 20 carbon atoms, the substitution is performed using one or more selected from the group consisting of an unsaturated hydrocarbon group having a monovalent or divalent double bond or a triple bond, a halogen group, a hydroxyl group, an amine group, an oxide group, a sulfide group, and a thiol group, and n' is an integer from 1 to 5.

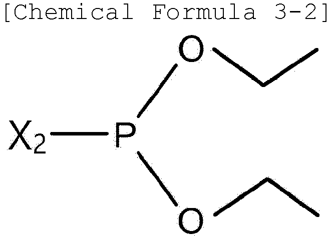

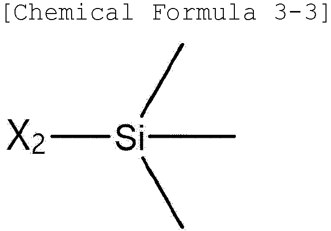

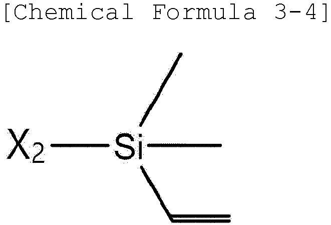

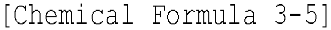

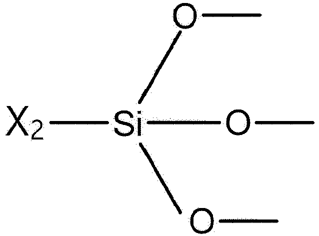

[Chemical Formula 3-6] X₂-CH₃

[Chemical Formula 3-7] X₂-C=C

[Chemical Formula 3-8] X₂-C≡N

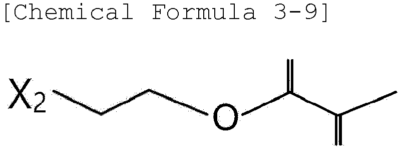

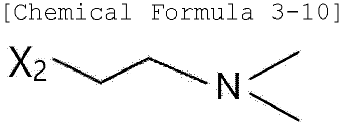

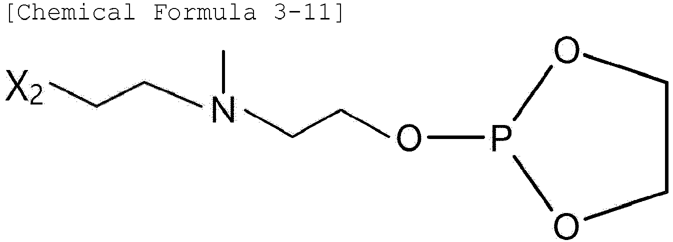

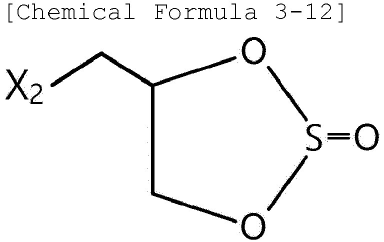

The compound represented by Chemical Formula 3-1 may preferably include one or more selected from the group consisting of compounds represented by Chemical Formulas 3-1a to 3-1e below (In each Chemical Formula, X₂ is independent).

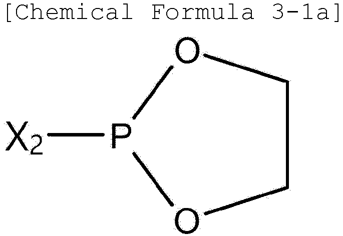

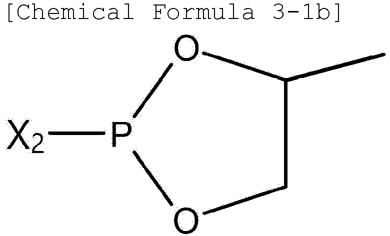

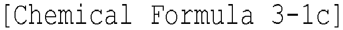

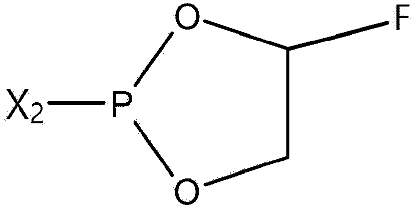

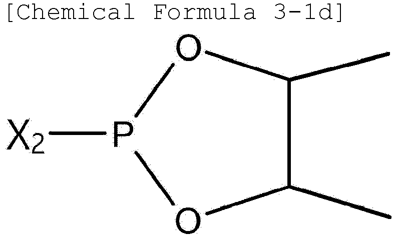

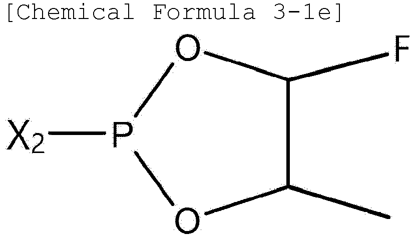

In Chemical Formulas of the present invention, the indications of carbon (C) and/or hydrogen (H) are omitted so that a person skilled in the art may more easily understand the present invention.

The symmetric or asymmetric cyclic phosphine compound prepared by the reaction may be a compound represented by Chemical Formula 4 below.

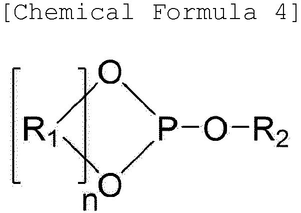

In Chemical Formula 4, R₁, R₂, and n are each as defined in Chemical Formulas 1 and 3.

For example, X₁ may be fluorine (F), chlorine (Cl), bromine (Br), or iodine (I), preferably chlorine or bromine.

An equivalence ratio of the compound represented by Chemical Formula 1 to the oxo coupling agent may be 0.2 to 2.5 : 1.

An equivalence ratio of a sum of the compound represented by Chemical Formula 1 and the organic halogen compound to the oxo coupling agent may be 0.5 to 2.2 : 1.

An equivalence ratio of the compound represented by Chemical Formula 1 to the organic halogen compound may be 0.8 to 1.2 : 1.

The reaction may proceed under an amine base. The amine base may be an aliphatic amine compound, and as a specific example, may include one or more selected from the group consisting of triethylamine, tributylamine, diethylamine, dibutylamine, diethylmethylamine, diisopropylethylamine, and dimethylacetamide.

An equivalence ratio of the amine base to the oxo coupling agent may be 0.2 to 1.5 : 1.

The reaction may be performed at a temperature of - 10 to 30 °C.

The reaction may be performed under one or more organic solvents selected from the group consisting of an ether-based solvent having 1 to 10 carbon atoms, a haloalkane-based solvent, a haloalkene-based solvent, a ketone-based solvent, an acetate-based solvent having 2 to 10 carbon atoms, and an aromatic hydrocarbon solvent having 6 to10 carbon atoms.

The method of preparing a cyclic phosphine compound may include i) forming a metal salt or a hydroxide by reacting the compound represented by Chemical Formula 1 and an oxo coupling agent; and ii) generating the compound represented by Chemical Formula 2 by reacting the metal salt or hydroxide and the organic halogen compound.

The compound represented by Chemical Formula 1 and the organic halogen compound and/or oxo coupling agent may each be dissolved in the organic solvent and mixed.

The reaction may be a protic compound-free reaction, as a specific example, an alcohol-free reaction and/or water-free reaction.

In the present disclosure, the protic compound-free reaction means a reaction that does not use a protic compound as a reactant, but may include the production of a protic compound as a by-product.

### [Advantageous Effects]

A method of preparing a symmetric or asymmetric cyclic phosphine compound according to the present invention can perform synthesis using cheaper compounds compared to a conventional method, has excellent economics by stably storing reaction raw materials, allows easy reaction control, can improve productivity and yield due to low generation of by-products, can be easily applied on an industrial scale, and has excellent expandability or substitutivity of a synthetic route.

### [Description of Drawings]

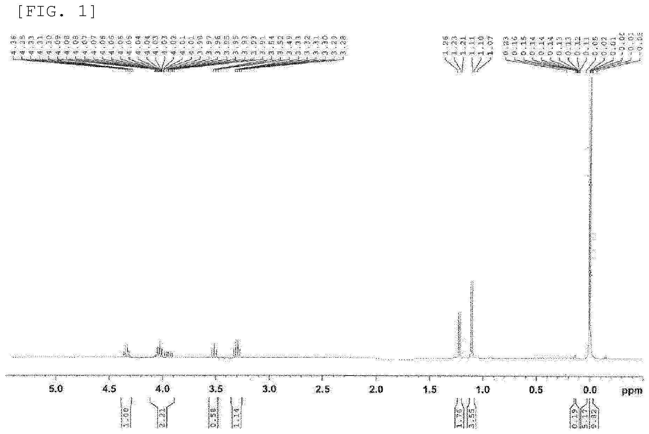

FIG. 1 is the ¹H NMR spectrum of the product prepared in Example 2 of the present invention.

### [Best Mode]

Hereinafter, the present invention is described in detail.

While the present inventors were researching a method of preparing a high-purity symmetric or asymmetric cyclic phosphine compound more stably and economically, the present inventors discovered that when reacting using a predetermined reaction condition and reaction route, all of the objectives can be achieved. Based on these results, the present inventors conducted further studies to complete the present invention.

A method of preparing a symmetric or asymmetric cyclic phosphine compound according to the present invention includes a step of reacting a compound represented by Chemical Formula 1 below with an organic halogen compound under an oxo coupling agent. The oxo coupling agent is a compound represented by Chemical Formula 2 below. In this case, cheaper compounds may be used compared to a conventional method, excellent economics may be achieved by stably storing reaction raw materials, productivity and yield may be improved due to easy reaction control and low generation of by-products, application on an industrial scale may be easy, and expandability or substitutivity of a synthetic route may be excellent.

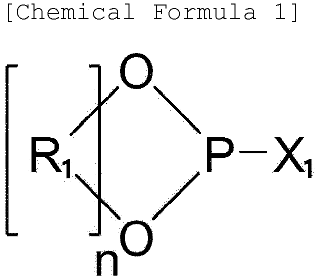

In Chemical Formula 1, R₁ is a substituted or unsubstituted alkylene group having 1 to 10 carbon atoms or an arylene group having 6 to 20 carbon atoms, the substitution is performed using one or more selected from the group consisting of an unsaturated hydrocarbon group having a monovalent or divalent double bond or a triple bond, a halogen group, a hydroxyl group, an amine group, an oxide group, a sulfide group, and a thiol group, n is an integer from 1 to 5, and X₁ is a halogen element.

In the present disclosure, an unsaturated hydrocarbon group having a monovalent or divalent double bond or a triple bond may refer to a hydrocarbon atomic group that has a bond line with one (monovalent) or two (divalent) other atoms or atomic groups and contains a double bond or triple bond.

[Chemical Formula 2] MₐH_{b}CO₃

In Chemical Formula 2, M is a monovalent or divalent metal, a is 1 or 2, and b is 0 or 1.

In Chemical Formula 1, R₁ is a substituted or unsubstituted alkylene group having 1 to 10 carbon atoms or an arylene group having 6 to 20 carbon atoms, The carbon number of the substituted or unsubstituted alkylene group may be preferably 1 to 10, more preferably 1 to 7, still more preferably 2 to 6. The carbon number of the substituted or unsubstituted arylene group may be preferably 6 to 20, more preferably 6 to 10.

The substitution may be performed using one or more selected from the group consisting of an unsaturated hydrocarbon group having a monovalent or divalent double bond or a triple bond, a halogen group, a hydroxyl group, an amine group, an oxide group, a sulfide group, and a thiol group, preferably one or more selected from the group consisting of a halogen group, an amine group, an oxide group, a sulfide group, and a thiol group, more preferably one or more selected from the group consisting of a halogen group, a hydroxyl group, and an amine group. The halogen group of the substituent may include preferably one or more selected from the group consisting of fluorine and chlorine, more preferably fluorine. For example, when the substituent includes carbon, the carbon number of the substituent may preferably 1 to 5, more preferably 1 to 3.

n may be preferably an integer from 1 to 5, more preferably 1 to 3, still more preferably 2 or 3.

X₁ is a halogen element (may be written as radical or group). For example, X₁ may be fluorine (F), chlorine (Cl), bromine (Br), or iodine (I), preferably chlorine or bromine, more preferably chlorine.

As a specific example, in the compound represented by Chemical Formula 1, R₁ may be a unsubstituted alkylene group having 2 to 6 carbon atoms or an alkylene group including one or more selected from the group consisting of a methyl group, an ethyl group, a methyl fluoride group, a methyl chloride group, an alkylamine group, an oxide group, a sulfide group, and a thiol group as a substituent, and n may be a 2 or 3.

As a more specific example, the compound represented by Chemical Formula 1 may be 2-chloro-1,3,2-dioxaphospholane (CP).

In Chemical Formula 2, M is a monovalent or divalent metal, and the monovalent metal refers to an alkali metal. Specifically, the monovalent metal may be lithium (Li), sodium (Na), potassium (K), rubidium (Rb), or cesium (Cs). The divalent metal refers to an alkaline earth metal. Specifically, the divalent metal may be beryllium (Be), magnesium (Mg), calcium (Ca), strontium (Sr), or barium (Ba).

M may be preferably an alkali metal, more preferably lithium, sodium, or potassium, still more preferably sodium.

For example, a may be 1 or 2, preferably 1.

For example, b may be 0 or 1, preferably 1.

As a preferred example, in the compound represented by Chemical Formula 2, M may be lithium, sodium, or potassium, and a and b may each be 1. More preferably, the compound represented by Chemical Formula 2 may be sodium bicarbonate (NaHCO₃). In this case, quantitative control may be easy, and thus reaction efficiency, purity, and yield may be improved. In addition, economic efficiency may be improved by using inexpensive reaction raw materials. Nevertheless, the stability of a product after reaction may be improved.

The organic halogen compound may be preferably a compound represented by Chemical Formula 3 below.

[Chemical Formula 3] X₂-R₂

In Chemical Formula 3, X₂ is a halogen group. For example, X₂ may be selected within the same range as X₁. Preferably, X₂ may be chlorine or bromine, more preferably chlorine.

As a preferred example, X₂ may be the same element as X₁.

R₂ is a radical represented by C_{d}HₑX'_{f}Y_{g}Zₕ, d is an integer from 1 to 15, preferably an integer from 1 to 10, more preferably an integer from 1 to 8, f is an integer from 0 to 31, preferably 0 to 30, more preferably 0 to 10, still more preferably 0 to 3, still more preferably 0 to 1, g is an integer from 0 to 5, preferably 0 to 2, more preferably 0 or 1, and h is an integer from 0 to 5, preferably 0 to 4, more preferably 0 to 3. b is a value that satisfies the oxidation number of R₂. The oxidation number of R₂ may be +1, which may be the sum of the oxidation numbers of all atoms included in R₂. For example, when R₂ is C₂HₑSi, d is 1, f and h are each 0, and Y is Si. When g is 1, e must be 5 to satisfy +1, which is the oxidation number of R₂.

X' may be a halogen element, preferably fluorine or chlorine, more preferably fluorine.

Y and Z may each independently include one or more selected from the group consisting of P, O, Si, N, and S, Y may be preferably P or Si, and Z may include one or more selected from the group consisting of O, N, and S.

In Chemical Formula 3, for example, the element directly bonded to X₂ may be C or Y. As a specific example, the element directly bonded to X₂ may be one selected from the group consisting of C, P, O, Si, N, and S, preferably C, P, or Si.

For example, R₂ may have a linear, branched, or cyclic structure. For example, R₂ may include an unsaturated hydrocarbon group with double or triple bonds.

For example, the sum of g and h may be 1 to 8, preferably 1 to 6, more preferably 1 to 4.

For example, R₂ may be the same as R₁.

The compound represented by Chemical Formula 3 may preferably include one or more selected from the group consisting of compounds represented by Chemical Formulas 3-1 to 3-12 (In each Chemical Formula, X₂ is independent).

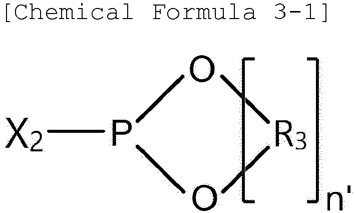

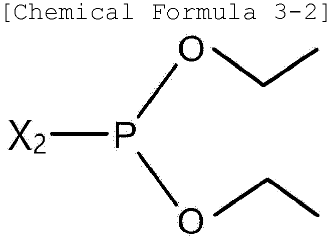

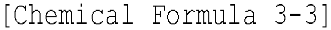

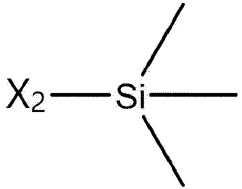

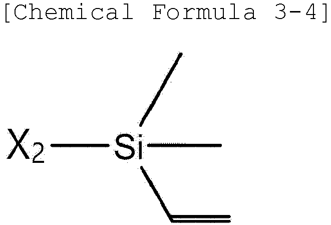

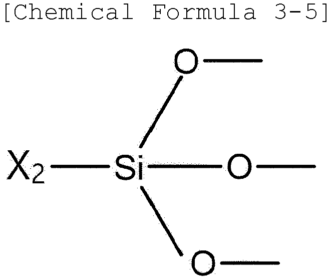

[Chemical Formula 3-6] X₂-CH₃

[Chemical Formula 3-7] X₂-C=C

[Chemical Formula 3-8] X₂-C≡N

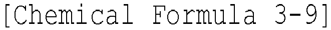

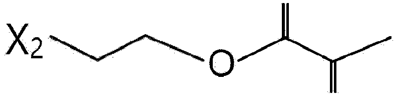

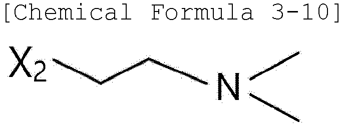

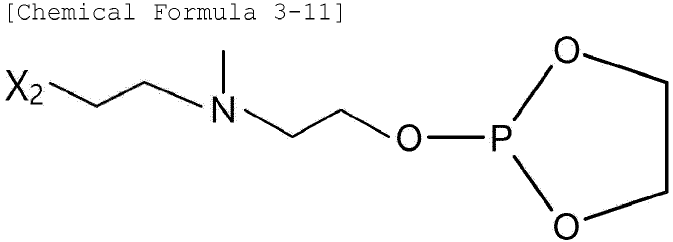

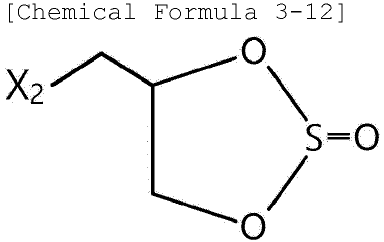

In Chemical Formula 3-1, R₃ may be a substituted or unsubstituted alkylene group having 1 to 10 carbon atoms or a substituted or unsubstituted arylene group having 6 to 20 carbon atoms. As a preferred example, R₃ may be a substituted or unsubstituted alkylene group having 1 to 7 carbon atoms, more preferably 2 to 6 carbon atoms, still more preferably 2 to 4 carbon atoms. The substitution may be performed using one or more selected from the group consisting of an unsaturated hydrocarbon group having a monovalent or divalent double bond or a triple bond, a halogen group, a hydroxyl group, an amine group, an oxide group, a sulfide group, and a thiol group, preferably one or more selected from the group consisting of a halogen group, an amine group, an oxide group, a sulfide group, and a thiol group, more preferably one or more selected from the group consisting of a halogen group, a hydroxyl group, and an amine group. The halogen group of the substituent may include preferably one or more selected from the group consisting of fluorine and chlorine, more preferably fluorine. For example, when the substituent includes carbon, the carbon number of the substituent may be preferably 1 to 5, preferably 1 to 3. n' may be preferably an integer from 1 to 5, more preferably 1 to 3, still more preferably 2 or 3.

The compound represented by Chemical Formula 3-1 may include preferably one or more selected from the group consisting of compounds represented by Chemical Formulas 3-1a to 3-1e below (In each Chemical Formula, X₂ is independent).

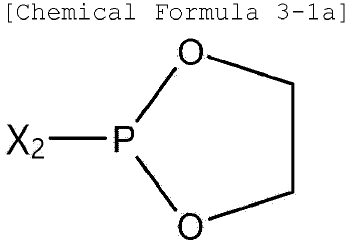

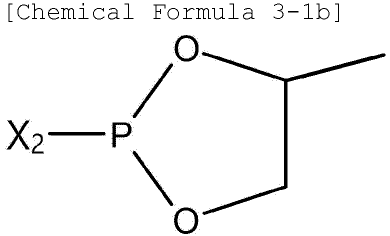

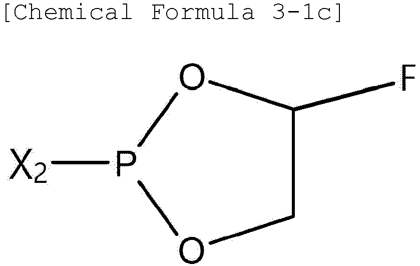

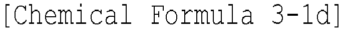

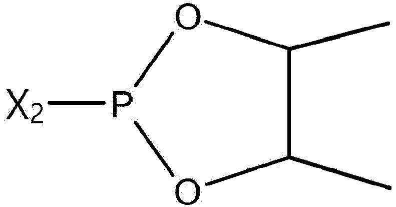

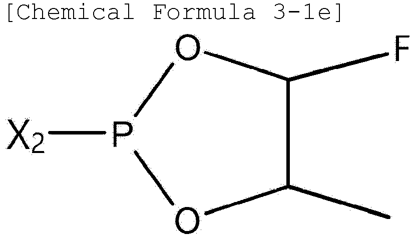

The symmetric or asymmetric cyclic phosphine compound prepared by the reaction may be preferably a compound represented by Chemical Formula 4 below.

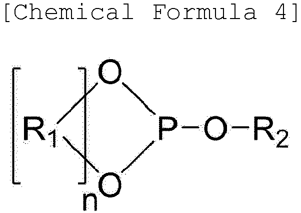

In Chemical Formula 4, R₁ and n are each as defined in Chemical Formula 1, and R₂ is as defined in Chemical Formula 3.

For example, R₂ may be the same as R₁. In this case, the organic halogen compound is a compound identical to the compound represented by Chemical Formula 1. In this case, a cyclic phosphine compound with a symmetrical structure may be obtained.

As a specific example, the cyclic phosphine compound represented by Chemical Formula 4 may include one or more selected from the group consisting of 2,2'-oxybis(1,3,2-dioxaphospholane), 2,2'-oxybis(1,3,2-dioxaphosphinane), and 2-[(trimethylsilyl)oxy]-1,3,2-dioxaphospholane.

In the present disclosure, the cyclic phosphine compound may be referred to differently as a cyclic phosphite compound, a cyclic pyrophosphite compound, etc., as long as the cyclic phosphine compound follows the definition of the present invention.

The reaction may preferably proceed under an amine base, and the amine base may preferably be an aliphatic amine. The aliphatic amine may include preferably one or more selected from the group consisting of triethylamine, tributylamine, diethylamine, dibutylamine, diethylmethylamine, diisopropylethylamine, and dimethylacetamide, still more preferably triethylamine. In this case, a decrease in yield due to by-products such as X₁H and X₂H generated during the reaction process may be prevented. Additionally, reaction control may be easier and economic advantages may be obtained.

As a specific example, the method of preparing a symmetric or asymmetric cyclic phosphine compound of the present invention may include a step of reacting the compound represented by Chemical Formula 1 and the organic halogen compound under the oxo coupling agent represented by Chemical Formula 2 to synthesize the cyclic phosphine compound represented by Chemical Formula 4.

Hereinafter, the method of the present invention is described in more detail based on the reaction mechanism.

For example, the reaction may proceed through the reaction route represented by Reaction Formula 1 below.

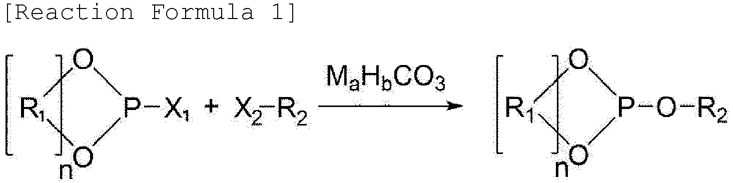

The compounds represented by Chemical Formulas 1 and 2 may be coupled to form the cyclic phosphine compound represented by Chemical Formula 4 by reacting under the oxo coupling agent.

More specifically, the reaction may include Reaction Formula 1a step and Reaction Formula 1b step below. At this time, Reaction Formula 1a step and Reaction Formula 1b step may be performed simultaneously or sequentially.

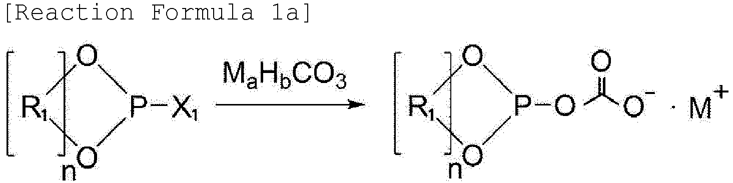

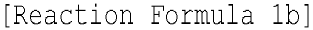

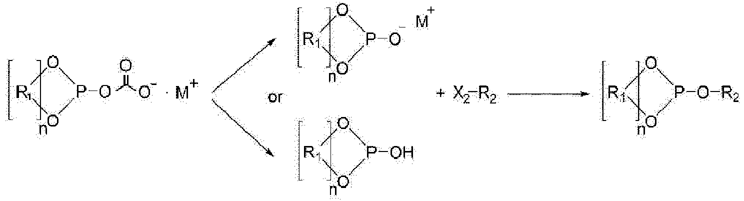

Specifically, in the reaction, after the reaction starts, X₁ of the compound represented by Chemical Formula 1 reacts with the oxo coupling agent, producing organic carbonate.

The organic carbonate is converted into a metal salt or hydroxide form as CO₂ is separated from -O·C(O)O- and escapes due to the unstable bonding force, and the metal salt or hydroxide undergoes a coupling reaction with the organic halogen compound represented by Chemical Formula 3 to form a (R₁)ₙ-(OPO)-O-R₂ structure, i.e., the symmetric or asymmetric cyclic phosphine compound represented by Chemical Formula 4 (the product of Reaction Formula 1b).

For example, in the step of Reaction Formula 1a, by-products such as hydrochloric acid may be formed, but since the by-products react with the oxo coupling agent and precipitate, the by-products may be easily removed through an evaporation or filtering process.

In addition, when reacting under the amine base, by-products such as hydrochloric acid react with the amine base compound and precipitate, so the by-products may be easily removed through an evaporation or filtering process. In particular, the yield and purity may be greatly improved by solving the problems of the prior art, i.e.,, the difficulty in controlling pH and the occurrence of side reactions due to hydrochloric acid.

For example, the reaction may be performed under an organic solvent. The organic solvent may include one or more selected from the group consisting of an ether-based solvent having 1 to 10 carbon atoms, a haloalkane-based solvent, a haloalkene-based solvent, a ketone-based solvent, an acetate-based solvent having 2 to 10 carbon atoms, and an aromatic hydrocarbon solvent having 6 to10 carbon atoms, preferably one or more selected from the group consisting of an ether-based solvent having 1 to 6 carbon atoms, a haloalkane-based solvent, a haloalkene-based solvent, and a ketone-based solvent, more preferably one or more selected from the group consisting of an ether-based solvent having 1 to 6 carbon atoms and a haloalkane-based solvent.

The ether-based solvent may be preferably one selected from the group consisting of dimethyl ether, diethyl ether, dibutyl ether, dimethyl ether, ethylmethyl ether, methyl t-butyl ether, 1,2-dimethoxyethane, ethylene glycol diethyl ether, tetrahydrofuran, 1,4-dioxane, and cyclopentyl methyl ether, more preferably one selected from the group consisting of dimethyl ether, diethyl ether, dibutyl ether, dimethyl ether, and ethylmethyl ether, still more preferably dimethyl ether or diethyl ether. In this case, the reaction may proceed stably due to excellent solubility for the reactant. In particular, when synthesizing a cyclic phosphine compound with a symmetrical structure, the coupling reaction may proceed stably.

For example, the haloalkane-based solvent may be a haloalkane-based solvent having 1 to 5 carbon atoms, preferably dichloromethane, trichloromethane, or tetrachloromethane, more preferably dichloromethane. In this case, the coupling reaction may proceed stably due to excellent solubility for the reactant. In particular, when synthesizing a cyclic phosphine compound with a symmetrical structure, the coupling reaction may proceed stably.

For example, the haloalkene-based solvent may be a haloalkene-based solvent including an alkenyl group having 1 to 5 carbon atoms, as a specific example, trichlorethylene.

For example, the ketone-based solvent may be a ketone-based solvent including an alkyl group having 1 to 5 carbon atoms, as a specific example, may include one or more selected from the group consisting of acetone and methyl ethyl ketone.

For example, the acetate-based solvent may be an acetate-based solvent including an alkyl group having 2 to 5 carbon atoms, as a specific example, ethyl acetate.

For example, the aromatic hydrocarbon solvent may be an aromatic hydrocarbon having 6 to 10 carbon atoms, as a specific example, may include one or more selected from the group consisting of benzene and toluene.

Conditions for the reaction, such as reaction temperature; and the equivalence ratio of a reactant, an amine base, and an organic solvent, may be explained by dividing into a case where the organic halogen compound is the same as the compound represented by Chemical Formula 1 and a case where the organic halogen compound is not the same as the compound represented by Chemical Formula 1.

First, in the case where the organic halogen compound is the same as the compound represented by Chemical Formula 1, after the reaction starts, approximately 50 % of a predetermined organic carbonate is formed (see Reaction Formula 1a), and the formed organic carbonate is converted into metal salt or hydroxide. Then, coupling reaction between the metal salt or hydroxide and the unreacted compound represented by Chemical Formula 1 occurs to form the compound represented by Chemical Formula 4 (see Chemical Formula 1b). Accordingly, in this case, the compound represented by Chemical Formula 1 and the organic halogen compound are not added individually, but only the compound represented by Chemical Formula 1 is added under the oxo coupling agent and only the reaction conditions are adjusted to produce a cyclic phosphine compound with a symmetrical structure.

For example, the reaction temperature may be adjusted differently at the step of forming the organic carbonate and at the step of forming the compound represented by Chemical Formula 4. As a specific example, in the step of forming the organic carbonate, the oxo coupling agent and the amine base may be introduced into a reaction zone, respectively, and the temperature of the reaction zone may be adjusted to -10 to 5 °C, preferably -5 to 5 °C. In the step of forming the compound represented by Chemical Formula 4, a step of introducing the compound represented by Chemical Formula 1 into the reaction zone and maintaining the temperature at -10 to 5 °C, preferably -5 to 5 °C, for 10 minutes to 7 hours, preferably 30 minutes to 5 hours (step of forming the organic carbonate) may be performed, and then a step of increasing the temperature of the reaction zone to 20 to 35 °C, preferably 20 to 26 °C and proceeding a reaction while maintaining the temperature for 30 minutes to 24 hours, preferably 1 to 10 hours (step of forming the compound represented by Chemical Formula 4) may be performed.

For example, the equivalence ratio of the compound represented by Chemical Formula 1 to the oxo coupling agent may be 1.5 to 2.5 : 1, preferably 1.8 to 2.3 : 1, more preferably 1.9 to 2.2 : 1. Within this range, the formation of side reactants may be suppressed, and yield and purity may be improved.

For example, the equivalence ratio of the amine base to the oxo coupling agent may be 0.8 to 1.5 : 1, preferably 0.8 to 1.3 : 1, more preferably 1.9 to 1.2 : 1. Within this range, the formation of side reactants may be suppressed, and yield and purity may be improved.

For example, the molar ratio of the organic solvent to the oxo coupling agent may be 25 to 35, preferably 28 to 34, more preferably 28 to 32. Within this range, the reaction proceeds smoothly, greatly improving yield and purity.

In this case, the organic solvent may be preferably an ether-based solvent. In this case, yield and purity may be further increased.

When the organic halogen compound and the compound represented by Chemical Formula 1 are different, as a specific example, the reaction may be initiated by introducing the compound represented by Chemical Formula 1 and the oxo coupling agent into the reaction zone, respectively, and the organic halogen compound is introduced into the reaction zone. In this case, a cyclic phosphine compound with an asymmetrical structure may be prepared.

For example, the reaction temperature may be -10 to 30 °C, preferably -10 to 5 °C, more preferably -5 to 5 °C. Within this range, side reactions may be suppressed, and the reaction may be easily controlled.

As a specific example, the reaction of forming the cyclic phosphine compound with an asymmetrical structure may include a step of introducing the oxo coupling agent and the amine base into the reaction zone, respectively, a step of adjusting the temperature of the reaction zone to - 10 to 5 °C, preferably -5 to 5 °C, a step of introducing the compound represented by Chemical Formula 1 into the reaction zone and initiating a reaction while maintaining the temperature at -10 to 5 °C for 10 minutes to 5 hours, preferably 30 minutes to 3 hours, and a step of introducing the organic halogen compound into the reaction zone and proceeding the reaction while maintaining the temperature at -10 to 5 °C, preferably -5 to 5 °C for 10 minutes to 3 hours, preferably 10 minutes to 2 hours. In this case, the reaction may be easily controlled, and by suppressing side reactions, a cyclic phosphine compound with an asymmetrical structure may be obtained with high yield and purity.

For example, the equivalence ratio of the compound represented by Chemical Formula 1 to the oxo coupling agent may be 0.2 to 1.5 : 1, preferably 0.2 to 1 : 1, more preferably 0.3 to 0.8 : 1. Within this range, the formation of side reactants may be suppressed, and yield and purity may be greatly improved.

For example, the equivalence ratio of the compound represented by Chemical Formula 1 to the organic halogen compound may be 0.8 to 1.2 : 1, preferably 0.9 to 1.2 : 1, more preferably 0.9 to 1.1 : 1, as a preferred example, 1 : 1. Within this range, the formation of side reactants may be suppressed, and yield and purity may be improved.

For example, the equivalence ratio of the amine base to the oxo coupling agent may be 0.8 to 1.2 : 1, preferably 0.9 to 1.2 : 1, more preferably 0.9 to 1.1 : 1, as a preferred example, 1 : 1. Within this range, the formation of side reactants may be suppressed, and yield and purity may be improved.

In this case, the molar ratio of the organic solvent to the oxo coupling agent may be 2 to 25, preferably 3 to 20, more preferably 3 to 15. Within this range, the formation of side reactants may be suppressed, and yield and purity may be improved.

Unlike a conventional method in which coupling reaction of a halophosphite compound such as 2-chloro-1,3,2-dioxaphospholane is performed under H₂O and pyridine or imidazole, or reaction with a compound containing an -OH group such as trimethylsilanol is performed to synthesize a cyclic pyrophosphite compound such as diethylene pyrophosphite[2-(1,3,2-dioxaphospholan-2-yloxy)-1,3,2-dioxaphospholane], in the present invention, the carbonate-based compound represented by Chemical Formula 2 is used as the nucleophilic substitution reaction inducer, that is, the coupling agent, of the compound represented by Chemical Formula 1. Preferably, a symmetric or asymmetric cyclic phosphine compound is synthesized by inducing a coupling reaction using a carbonate-based compound of a specific structure under an amine base. In this case, quantitative control of the injected reactants is easy to prevent side reactions, In addition, polymerization reaction caused by water may be prevented, so yield and purity may be greatly improved. In addition, the stability of the final product obtained after the reaction may be improved by removing acids that decompose the symmetric or asymmetric cyclic phosphine compound, which is the target product. In addition, by using a carbonate-based compound represented by Chemical Formula 3 as a nucleophilic substitution reaction inducer, a non-alcohol-based haloalkylsilane compound such as chlorotrimethylsilane may be used. Accordingly, compared to the conventional method using an alcohol-based compound including a silanol group-containing compound, reaction control may be easier. In addition, compared to the case of using a compound containing a silanol group, inexpensive reaction raw materials may be used, and economic efficiency may be improved due to the excellent storage stability of reaction raw materials. In addition, compared to the conventional method, the reaction route may be easily expanded, allowing various synthetic route designs.

From this perspective, the reaction may be a protic compound-free reaction, preferably an alcohol-free reaction, that is, a reaction that does not use alcohol-based compounds including silanol group-containing compounds.

For example, the reaction may be performed under an inert atmosphere to allow the reaction to proceed stably. The inert atmosphere may be formed preferably using one or more inert gases selected from the group consisting of nitrogen gas, argon gas, and helium gas, more preferably nitrogen gas, considering economic feasibility.

For example, the inert atmosphere may mean filling 60 % by volume or more, preferably 70 % by volume or more, more preferably 80 % by volume or more of the total air inside the reactor with an inert gas.

As a preferred example, the compound represented by Chemical Formula 1, the organic halogen compound, and the oxo coupling agent may each be dissolved in the organic solvent and introduced into the reaction zone. In this case, reaction efficiency may be further improved.

In the reaction process, CO₂ may be generated by using the carbonate-based compound represented by Chemical Formula 2 as a nucleophilic substitution reaction inducer of the compound represented by Chemical Formula 1, that is, a coupling agent. Since CO₂ diffuses into the atmosphere in the form of a gas and disappears naturally during the reaction process or after the reaction is completed, a separate CO₂ removal process is not required.

For example, in the method of preparing a cyclic phosphine compound of the present invention, the yield of the cyclic phosphine compound may be 70 % or more, 75 to 99 %, or 80 to 98 %.

For example, the symmetric or asymmetric cyclic phosphine compound prepared according to the method of preparing a cyclic phosphine compound of the present invention may have a purity of 90 % or more, 90 to 99.5 %, or 95 to 99 %.

For example, the method of preparing a cyclic phosphine compound may include a purification step after the reaction is completed. For example, the purification may include one or more selected from the group consisting of a filtration process, an evaporation process, a recrystallization process, and a washing process.

The filtration, evaporation, recrystallization, and washing may be performed according to methods commonly performed in the technical field to which the present invention pertains.

For example, the filtration refers to filtering the reaction results after the reaction is completed, and may remove solid by-products, etc.

For example, the evaporation is performing vacuum distillation of the filtrate from which solid by-products have been removed after the filtration, and solvents and volatile substances may be removed. For example, the vacuum distillation may be performed at a temperature of 25 to 250 °C, preferably 30 to 200 °C, more preferably 50 to 95 °C, still more preferably 70 to 90 °C under a pressure of 0.001 to 760 Torr, preferably 0.01 to 700 Torr, more preferably 0.01 to 500 Torr, still more preferably 0.1 to 100 Torr.

The recrystallization is a process that may be selected as needed. The recrystallization involves dissolving the solid purified product obtained after the evaporation in one or more solvents selected from the group consisting of water, ethanol, isopropyl alcohol, ethyl acetate, hexane, dichloromethane, chloroform, diethylether, THF, toluene, and xylene and then recrystallizing the product. In this case, a high-purity cyclic phosphine compound may be obtained.

In addition, the present invention provides an electrolyte solution for batteries including the symmetric or asymmetric cyclic phosphine compound prepared according to the method of preparing a cyclic phosphine compound and a secondary battery including the electrolyte solution.

The electrolyte solution is a non-aqueous electrolyte solution for lithium secondary batteries, includes the symmetric or asymmetric cyclic phosphine compound as an electrolyte additive, and includes a predetermined organic solvent and lithium salt. Since the cyclic phosphine compound prepared according to the method of preparing a cyclic phosphine compound of the present invention has high purity as described above, when the cyclic phosphine compound is added as an electrolyte additive of a secondary battery, battery cycle characteristics may be significantly improved.

Based on a total weight of the electrolyte solution, the symmetric or asymmetric cyclic phosphine compound may be included in an amount of preferably 0.1 to 5 % by weight, more preferably 0.2 to 3 % by weight. Within this range, battery cycle characteristics may be further improved.

The organic solvent is not particularly limited as long as the organic solvent is an organic solvent commonly used in a battery electrolyte solution in the technical field to which the present invention pertains. For example, the organic solvent may be a carbonate-based organic solvent. Specifically, the organic solvent may include one or more selected from the group consisting of ethylene carbonate (EC), diethyl carbonate (DEC), ethylmethyl carbonate (EMC), dimethyl carbonate (DMC), propylene carbonate (PC), dipropyl carbonate (DPC), butylene carbonate, methylpropyl carbonate, and ethylpropyl carbonate.

For example, the organic solvent may be a one-type solvent or a mixed solvent of two or more types. Preferably, to improve the charging and discharging performance of a battery, the organic solvent may be a mixture of a high-dielectric constant organic solvent with high ionic conductivity and a low-viscosity organic solvent with a viscosity appropriate for application to a battery.

For example, EC and/or PC may be used as the high-dielectric constant organic solvent, and one or more selected from the group consisting of EMC, DMC, and DEC may be used as the low-viscosity organic solvent. Preferably, the high-dielectric constant organic solvent and the low-viscosity organic solvent may be mixed in a volume ratio of 2:8 to 8:2. More specifically, the organic solvent may be a three-element mixed solvent of EC or PC, EMC, and DEC. At this time, the ratio of EC or PC : EMC : DEC may be 3 : 3 to 5 : 2 to 4.

When the organic solvent contains moisture, lithium ions in the electrolyte solution may be hydrolyzed, so it is desirable to control the moisture in the organic solvent to 150 ppm or less, preferably 100 ppm or less.

The lithium salt may be used without particular limitation as long as the lithium salt is a compound that may provide lithium ions used in lithium secondary batteries. Specifically, the lithium salt may include one or more selected from the group consisting of LiPF₆, LiBF₄, LiCl, LiBr, LiI, LiClO₄, LiB₁₀Cl₁₀, LiCF₃SO₃, LiCF₃CO₂, LiAsF₆, LiSbF₆, LiAlCl₄, CH₃SO₃Li, CF₃SO₃Li, and (CF₃SO₂)₂NLi.

When the lithium salt is dissolved in an electrolyte solution, the lithium salt may function as a source of lithium ions within a lithium secondary battery and promote the movement of lithium ions between an anode and cathode. Accordingly, the lithium salt is preferably included in the electrolyte solution at a concentration of approximately 0.6 mol % to 2 mol %. When the concentration of the lithium salt is less than 0.6 mol %, the conductivity of an electrolyte may decrease and electrolyte performance may deteriorate. When the concentration of the lithium salt exceeds 2 mol %, as the viscosity of the electrolyte increases, the mobility of lithium ions may decrease. Considering the conductivity of the electrolyte and the mobility of lithium ions, the lithium salt may be included in the electrolyte solution in an amount of preferably 0.7 mol % to 1.6 mol %, more preferably 0.8 mol % to 1.5 mol %.

For example, in addition to electrolytic salt prepared through an electrolytic salt preparation method, the electrolyte solution for batteries of the present invention may further include additives (hereinafter referred to as other additives) that may be generally used in electrolyte solutions for the purpose of improving battery lifespan characteristics, suppressing battery capacity reduction, and improving battery discharge capacity.

For example, the other additive components may include metal phosphate-based compounds.

For example, the metal phosphate-based compounds may include one or more selected from the group consisting of lithium difluoro(bisoxalato)phosphate (LiDFOP), lithium tetrafluorooxalatophosphate (LiTFOP), lithium difluorophosphate, and lithium trioxalatophosphate.

The metal phosphate-based compound is an ingredient added to improve the performance of lithium secondary batteries, lithium ion capacitors, etc., and may be included in an electrolyte solution in an amount of 0.3 to 1.5 % by weight, preferably 0.7 to 1.2 % by weight. When the content of the metal phosphate-based compound satisfies the range, it is desirable in terms of improving the low-temperature characteristics and cycle characteristics of a battery.

As another example, the present invention may provide a secondary battery including the electrolyte solution, and the secondary battery includes an anode, a cathode, a separator disposed between the anode and the cathode, and the electrolyte solution for batteries.

For example, the cathode may be manufactured by mixing a cathode active material, a binder, and optionally a conductive agent to prepare a composition for forming a cathode active material layer, and then applying the composition to a cathode current collector such as aluminum foil.

For example, the cathode active material may be a typical NCM (lithium nickel manganese cobalt oxide, LiNiMnCoO₂) cathode active material used in lithium secondary batteries. Specifically, the cathode active material may be a lithium complex metal oxide in the form of a chemical formula of Li[NixCo_{1-x-y}Mn_{y}]O₂ (here 0<x<0.5, 0<y<0.5), without being limited thereto.

For example, in the chemical formula of Li[NixCo_{1-x-y}Mn_{y}]O₂ of the lithium complex metal oxide, variables x and y may independently be 0.0001<x<0.5 and 0.0001<y<0.5, or 0.001<x<0.3 and 0.001<y<0.3.

Another examples of the cathode active material may include a compound (lithiated intercalation compound) capable of reversible intercalation and deintercalation of lithium.

Among the compounds, in terms of battery capacity characteristics and stability, one or more selected from the group consisting of LiCoO₂, LiMnO₂, LiMn₂O₄, LiNiO₂, LiNiₓMn₍₁₋ₓ₎O₂ (0<x<1), and LiM1ₓM2_{y}O₂ (₀≤x≤1, 0≤y≤1, 0≤x+y≤1, and M1 and M2 each independently include one or more selected from the group consisting of Al, Sr, Mg, and La) may be preferably used.

For example, the anode may be manufactured by mixing an anode active material, a binder, and optionally a conductive agent to prepare a composition for forming an anode active material layer, and then applying the composition to an anode current collector such as copper foil.

For example, a compound capable of reversible intercalation and deintercalation of lithium may be used as the anode active material.

Specific examples of the anode active material may include carbonaceous materials such as artificial graphite, natural graphite, graphitized carbon fiber, and amorphous carbon. In addition to the carbonaceous materials, a metallic compound that may be alloyed with lithium or a composite containing a metallic compound and a carbonaceous material may also be used as the anode active material. For example, graphite may be used.

For example, as the metal that may be alloyed with lithium, at least one of Si, Al, Sn, Pb, Zn, Bi, In, Mg, Ga, Cd, Si alloy, Sn alloy, and Al alloy may be used.

In addition, a metallic lithium thin film may be used as the anode active material. Considering stability, one or more selected from the group consisting of crystalline carbon, amorphous carbon, carbon composite, lithium metal, and alloy containing lithium may be used as the anode active material.

By applying the electrolyte additives including the symmetric or asymmetric cyclic phosphine compound of the present invention to the secondary battery of the present invention, battery characteristics such as battery cycle characteristics, battery charging resistance, output characteristics, capacity recovery characteristics at low and high temperatures, and lifespan characteristics may be further improved.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### Example 1

After installing a thermometer in a 250 mL three-neck reaction vessel, 90 ml of dried diethyl ether, 11 ml (78.92 mmol, 1.05 eq) of triethylamine, and 6.32 g (75.23 mmol, 1 eq) of NaHCOs were added under a nitrogen atmosphere, and the mixture was cooled to 0 °C. A solution obtained by dissolving 20 g (158.13 mmol, 2 eq) of 2-chloro-1,3,2-dioxaphospholane in 30 ml of diethyl ether was slowly added dropwise to the above mixture over 30 minutes, and then stirring was performed for 1 hour while maintaining the temperature at 0 °C. Afterwards, the temperature was increased to room temperature, stirring was performed for 3 hours, the residue was filtered, and the filtrate was subjected to reduced pressure distillation to remove the solvent. Then, reduced pressure purification was performed at 84 °C under 1.5 Torr to obtain 25.6 g of a solid product.

As a result of confirming the structure of the obtained compound by ¹H NMR, the compound was 2-(1,3,2-dioxaphospholan-2-yloxy)-1,3,2-dioxaphospholane. The yield was 82 %. Here, the characteristic ¹H NMR peak values were as follows.

¹H NMR (CDCl3, 400MHz) δ = 4.18 (m, 2H), 4.02 (m, 2H)
The reaction proceeds through the reaction path shown in Reaction Formula 2 below.

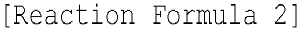

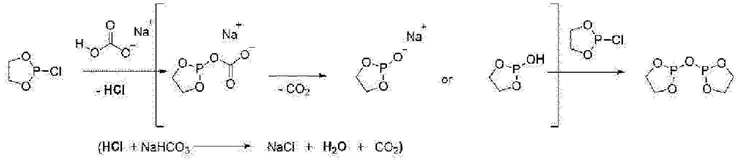

### Example 2

After installing a thermometer in a 250 mL three-neck reaction vessel, 40 ml of dried dichloromethane, 5.8 ml (41.5 mmol, 1.05 eq) of triethylamine, and 8.3 g (98.8 mmol, 2.5 eq) NaHCO₃ were added under a nitrogen atmosphere, and the mixture was cooled to 0 °C. A solution obtained by dissolving 5.55 g (39.53 mmol, 1.0 eq) of 2-chloro-4-methyl-1,3,2-dioxaphospholane in 10 ml of dichloromethane was added to the mixture, and stirring was performed for 1 hour while maintaining the temperature at 0 °C. Then, a solution obtained by dissolving 5 ml (39.53 mmol) of chlorotrimethylsilane in 10 ml of dichloromethane was slowly added dropwise to the mixture over 30 minutes, and stirring was performed for 6 hours while maintaining the temperature at 0 °C. The residue was filtered, and the filtrate was subjected to reduced pressure distillation to remove the solvent. Then, reduced pressure purification was performed at 84 °C under 1.5 Torr to obtain 6.2 g of a solid product.

As a result of confirming the structure of the obtained compound by ¹H NMR spectrum shown in FIG. 1 below, the compound was 4-methyl-2-((trimethylsilyl)oxy)-1,3,2-dioxaphospholane. The yield was 81 %. Here, the characteristic ¹H NMR peak values were as follows.

¹H NMR (CDCl3, 400MHz) δ = 3.26-4.34 (m, 2H), 3.92 (m, 3H), 1.11-1.23 (m, 3H), 0.052 (s. 9H)
The reaction proceeds through the reaction path shown in Reaction Formula 3 below.

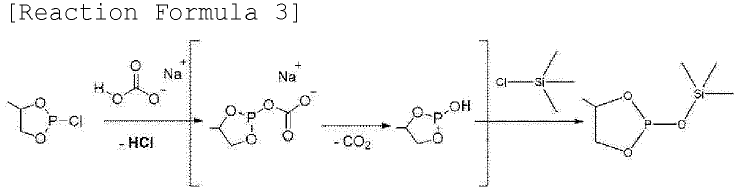

### Comparative Example 1

Under a nitrogen atmosphere, 120 ml of dried THF was added to a dried 200 ml three-necked flask, 20.2 g of 2-chloro-1,3,2-dioxaphospholane was added thereto, and then the compounds were dissolved while cooling to 0 °C. Then, 14.4 ml of pyridine was added thereto, 1.46 g of deionized water was slowly added dropwise for 1 hour, and then stirring was performed for 2 hours while maintaining the temperature at 0 °C. The temperature was gradually increased to room temperature, and additional stirring was performed for 2 hours. The residue was filtered, and the filtrate was subjected to reduced pressure distillation to remove the solvent. Then, reduced pressure purification was performed at 84 °C under 1.5 Torr to obtain 2-(1,3,2-dioxaphospholan-2-yloxy)-1,3,2-dioxaphospholane in a yield of 45 %. The structure of the obtained product was confirmed by the characteristic ¹H NMR peak values as follows.
¹H NMR (CDCl3, 400MHz) δ = 4.18 (m, 2H), 4.02 (m, 2H)

## Claims

1. A method of preparing a cyclic phosphine compound, comprising reacting a compound represented by Chemical Formula 1 below with an organic halogen compound under an oxo coupling agent,
wherein the oxo coupling agent is a compound represented by Chemical Formula 2 below. 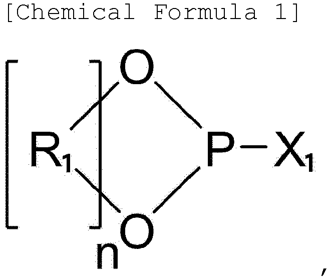
wherein R₁ is a substituted or unsubstituted alkylene group having 1 to 10 carbon atoms or an arylene group having 6 to 20 carbon atoms, the substitution is performed using one or more selected from the group consisting of an unsaturated hydrocarbon group having a monovalent or divalent double bond or a triple bond, a halogen group, a hydroxyl group, an amine group, an oxide group, a sulfide group, and a thiol group, n is an integer from 1 to 5, and X₁ is a halogen element.
[Chemical Formula 2] MₐH_{b}CO₃,
wherein M is a monovalent or divalent metal, a is 1 or 2, and b is 0 or 1.

2. The method according to claim 1, wherein, in Chemical Formula 2, M is a monovalent alkali metal, a is 1, and b is 1.

3. The method according to claim 1, wherein the organic halogen compound is a compound represented by Chemical Formula 3 below.
[Chemical Formula 3] X₂-R₂,
wherein X₂ is a halogen group, R₂ is a radical represented by C_{d}HₑX'_{f}Y_{g}Zₕ, d is an integer from 1 to 15, f is an integer from 0 to 31, g is an integer from 0 to 5, h is an integer from 0 to 5, e is a value that satisfies an oxidation number of R₂, X' is a halogen radical, and Y and Z each independently comprise one or more selected from the group consisting of P, O, Si, N, and S.

4. The method according to claim 3, wherein the compound represented by Chemical Formula 3 comprises one or more selected from the group consisting of compounds represented by Chemical Formulas 3-1 to 3-12 below (In each Chemical Formula, X₂ is independent). 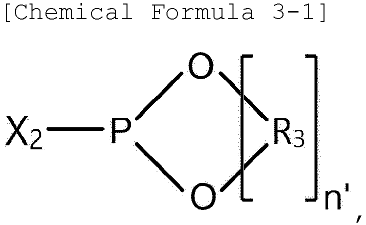 wherein R₃ is a substituted or unsubstituted alkylene group having 1 to 10 carbon atoms or a substituted or unsubstituted arylene group having 6 to 20 carbon atoms, the substitution is performed using one or more selected from the group consisting of an unsaturated hydrocarbon group having a monovalent or divalent double bond or a triple bond, a halogen group, a hydroxyl group, an amine group, an oxide group, a sulfide group, and a thiol group, and n' is an integer from 1 to 5. 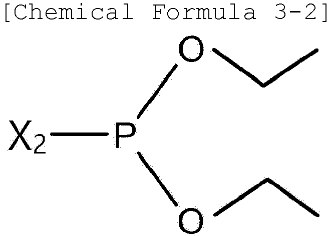 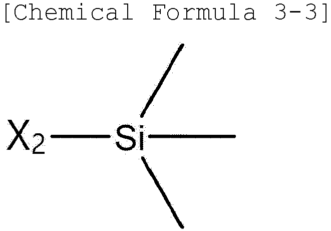 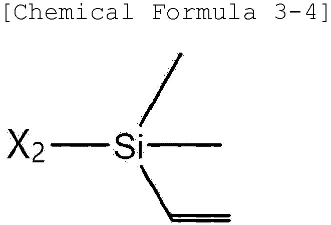 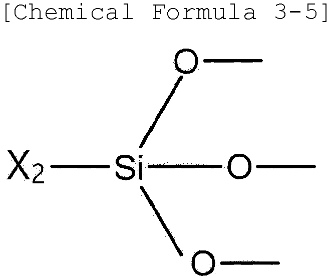
[Chemical Formula 3-6] X₂ - CH₃
[Chemical Formula 3-7] X₂ - C = C
[Chemical Formula 3-8] X₂ - C ≡ N

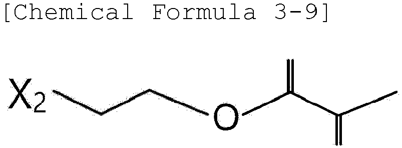

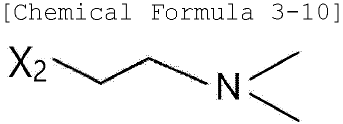

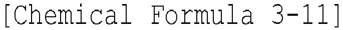

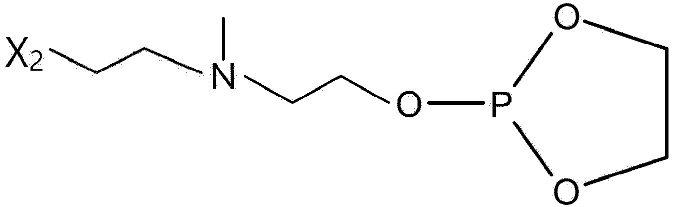

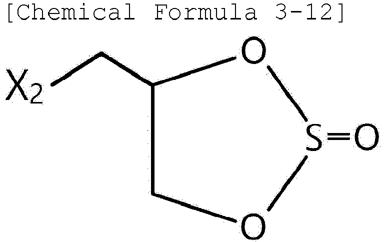

5. The method according to claim 4, wherein the compound represented by Chemical Formula 3-1 comprises one or more selected from the group consisting of compounds represented by Chemical Formulas 3-1a to 3-1e below (In each Chemical Formula, X₂ is independent).

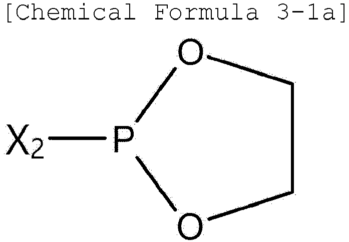

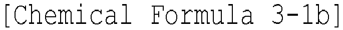

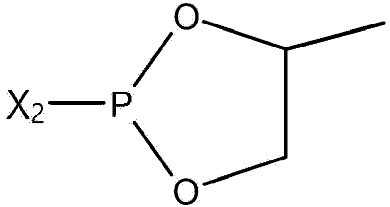

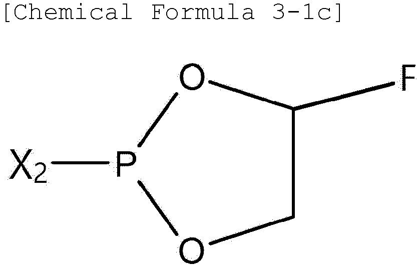

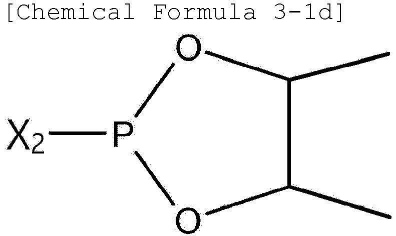

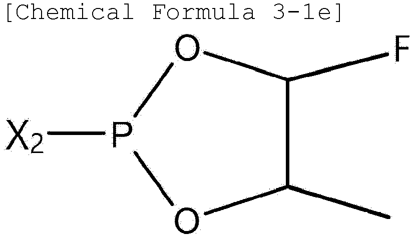

6. The method according to claim 1, wherein the cyclic phosphine compound prepared by the reaction is a compound represented by Chemical Formula 4 below. 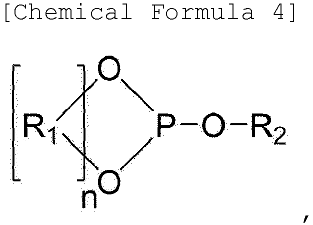 wherein R₁ and n are each as defined in Chemical Formula 1, R₂ is a radical represented by C_{d}HₑX'_{f}Y_{g}Zₕ, d is an integer from 1 to 15, f is an integer from 0 to 31, g is an integer from 0 to 5, h is an integer from 0 to 5, e is a value that satisfies an oxidation number of R₂, X' is a halogen element, and Y and Z each independently comprise one or more selected from the group consisting of P, O, Si, N, and S.

7. The method according to claim 1, wherein X₁ is fluorine (F), chlorine (Cl), bromine (Br), or iodine (I).

8. The method according to claim 1, wherein an equivalence ratio of the compound represented by Chemical Formula 1 to the oxo coupling agent is 0.2 to 2.5 : 1.

9. The method according to claim 1, wherein an equivalence ratio of a sum of the compound represented by Chemical Formula 1 and the organic halogen compound to the oxo coupling agent is 0.8 to 1.2 : 1.

10. The method according to claim 1, wherein the reaction proceeds under an amine base.

11. The method according to claim 10, wherein the amine base is an aliphatic amine compound.

12. The method according to claim 1, comprising:
i) forming a metal salt or a hydroxide by reacting the compound represented by Chemical Formula 1 and an oxo coupling agent; and ii) generating a compound represented by Chemical Formula 4 below by reacting the metal salt or hydroxide and the organic halogen compound. 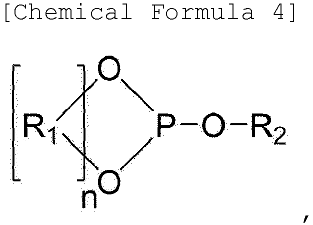 wherein R₁ and n are each as defined in Chemical Formula 1, R₂ is a radical represented by C_{d}HₑX'_{f}Y_{g}Zₕ, d is an integer from 1 to 15, f is an integer from 0 to 31, g is an integer from 0 to 5, h is an integer from 0 to 5, e is a value that satisfies an oxidation number of R₂, X' is a halogen element, and Y and Z each independently comprise one or more selected from the group consisting of P, O, Si, N, and S.

13. The method according to claim 10, wherein an equivalence ratio of the amine base to the oxo coupling agent is 0.2 to 1.5 : 1.

14. The method according to claim 1, wherein the reaction is performed at a temperature of -10 to 30 °C.

15. The method according to claim 1, wherein the reaction is performed under one or more organic solvents selected from the group consisting of an ether-based solvent having 1 to 10 carbon atoms, a haloalkane-based solvent, a haloalkene-based solvent, a ketone-based solvent, an acetate-based solvent having 2 to 10 carbon atoms, and an aromatic hydrocarbon solvent having 6 to10 carbon atoms.

16. The method according to claim 15, wherein the compound represented by Chemical Formula 1 and the organic halogen compound are each dissolved in the organic solvent and mixed.

17. The method according to claim 1, wherein the reaction is a protic compound-free reaction.
